# EUROPÄISCHE PATENTSCHRIFT

(11) **EP 2 824 302 B1**
(45) Veröffentlichungstag und Bekanntmachung des Hinweises auf die Patenterteilung: **29.03.2017**
(21) Anmeldenummer: 14175146.1
(22) Anmeldetag: 01.07.2014
(51) Int. Cl.: F01P 11/20

(54) **Verfahren und System zur Wärmeübertragung für ein Fahrzeug**
Method and system for heat transfer for a vehicle
Procédé et dispositif de transfert thermique pour un véhicule

(30) Priorität: 08.07.2013 DE 102013213317
(43) Veröffentlichungstag der Anmeldung: 14.01.2015
(73) Patentinhaber: Volkswagen Aktiengesellschaft, 38440 Wolfsburg (DE)
(72) Erfinder: Käppner, Christoph, 38118 Braunschweig (DE); Fritzsche, Jörg, 38518 Gifhorn (DE); Hampe, Jens, 38124 Braunschweig (DE)
(74) Vertreter: Bungartz, Florian

(56) Entgegenhaltungen:
- DE-A1-102005 040 114
- DE-C1- 4 307 841
- FR-A1- 2 864 148
- GB-A- 2 108 262
- JP-A- S62 121 823

## Beschreibung

Die vorliegende Erfindung betrifft ein Verfahren und ein System zur Wärmeübertragung, um insbesondere Abwärme eines Fahrzeugs gezielt zur Erwärmung bestimmter Bereiche des Fahrzeugs einzusetzen.

Aus der DE 43 07 841 C1 ist Heizkreislaufsystem für ein Kraftfahrzeug bekannt, bei dem in Abhängigkeit von der Drehrichtung einer Pumpe eine geförderte Wärmeträgerflüssigkeit über entweder einen ersten Auslass oder einen zweiten Auslass der Pumpe abgeführt. Dadurch wird ein Verbrennungsmotor entweder aus dem Kreislauf des Kühlmittels ausgeschlossen oder in diesen einbezogen.

Die DE 10 2012 002 952 A1 offenbart einen Latentwärmespeicher für mobile Anwendungen.

Bei nach dem Stand der Technik bekannten Kreisläufen zur Wärmeübertragung innerhalb eines Fahrzeugs werden Wärmequellen und/oder Wärmesenken mit Hilfe einer Bypassleitung versehen, über welche die entsprechende Wärmequelle oder Wärmesenke mittels eines aktiven Ventils abgeschaltet werden kann, indem ein Wärmestrom über die Bypassleitung an der Wärmequelle oder Wärmesenke vorbeigeleitet wird.

Nicht zuletzt aufgrund dieser Bypassleitungen weisen die bekannten Kreisläufe nachteiligerweise eine erhöhte Leitungslänge und (auch dadurch) eine erhöhte Verlustleistung auf.

Daher stellt sich die vorliegende Erfindung die Aufgabe, die Wärmeübertragung für ein Fahrzeug mit einer im Vergleich zum Stand der Technik geringeren Komplexität zu realisieren und insbesondere die benötigte Leitungslänge und auch die Verlustleistung zu reduzieren.

Erfindungsgemäß wird diese Aufgabe durch ein Verfahren zur Wärmeübertragung für ein Fahrzeug nach Anspruch 1, durch ein System zur Wärmeübertragung für ein Fahrzeug nach Anspruch 5 und durch ein Fahrzeug nach Anspruch 9 gelöst. Die abhängigen Ansprüche definieren bevorzugte und vorteilhafte Ausführungsformen der vorliegenden Erfindung.

Im Rahmen der vorliegenden Erfindung wird ein Verfahren zur Wärmeübertragung für ein Fahrzeug bereitgestellt. Dabei umfasst das Verfahren folgende Schritte:
- Pumpen eines Transfermediums, mit welchem Wärme transportiert wird, in eine erste Strömungsrichtung, um Wärme zwischen einer ersten Einrichtung des Fahrzeugs und einer zweiten Einrichtung des Fahrzeugs auszutauschen.
- Pumpen des Transfermediums in eine zweite Strömungsrichtung, welche der ersten Strömungsrichtung genau entgegengerichtet ist, um Wärme zwischen der ersten Einrichtung und einer dritten Einrichtung des Fahrzeugs, welche nicht der zweiten Einrichtung entspricht, auszutauschen.

Mit anderen Worten wird erfindungsgemäß anhand der Strömungsrichtung entschieden, ob die Wärme zwischen der ersten und der zweiten Einrichtung des Fahrzeugs ausgetauscht wird oder ob die Wärme zwischen der ersten und der dritten Einrichtung des Fahrzeugs ausgetauscht wird. Indem mit Hilfe der Strömungsrichtung entschieden wird, mit welcher Einrichtung Wärme ausgetauscht wird, kann vorteilhafterweise auf Bypassleitungen (Umgehungsleitungen) und auf Steuerventile zur Steuerung dieser Bypassleitungen verzichtet werden. Dadurch wird die Komplexität des Wärme-Kreislaufes gesenkt sowie die Leitungslänge und damit die Verlustleistung reduziert.

Als Transfermedium kann beispielsweise ein Thermoöl oder ein Thermalöl eingesetzt werden.

Es sei darauf hingewiesen, dass sowohl die erste Einrichtung als auch die zweite Einrichtung als auch die dritte Einrichtung jeweils mehrere Vorrichtungen umfassen kann, so dass Wärme beispielsweise zwischen der ersten Einrichtung oder mehreren ersten Vorrichtungen und mehreren zweiten Vorrichtungen ausgetauscht wird, wenn das Transfermedium in die erste Strömungsrichtung gepumpt wird, während Wärme zwischen der ersten Einrichtung oder mehreren ersten Vorrichtungen und mehreren dritten Vorrichtungen ausgetauscht wird, wenn das Transfermedium in die zweite Strömungsrichtung gepumpt wird.

Gemäß einer bevorzugten erfindungsgemäßen Ausführungsform umfasst die erste Einrichtung einen Wärmespeicher des Fahrzeugs. Dabei handelt es sich bei dieser Ausführungsform bei der zweiten Einrichtung um eine Wärmequelle und bei der dritten Einrichtung um eine Wärmesenke des Fahrzeugs. Natürlich könnte es sich auch in umgekehrter Weise bei der zweiten Einrichtung um die Wärmesenke und bei der dritten Einrichtung um die Wärmequelle handeln. Dabei wird Wärme von der Wärmequelle zu dem Wärmespeicher transportiert, wenn das Transfermedium in die erste Strömungsrichtung gepumpt wird, während Wärme von dem Wärmespeicher zu der Wärmesenke transportiert wird, wenn das Transfermedium in die zweite Strömungsrichtung gepumpt wird.

Vorteilhafterweise wird also allein durch die Wahl der Strömungsrichtung entschieden, ob die Wärme von dem Wärmespeicher zur Wärmesenke oder von der Wärmequelle zum Wärmespeicher transportiert wird.

Insbesondere umfasst der Wärmespeicher ein Phasenübergangsmaterial, um damit die thermische Energie zu speichern. Das Phasenübergangsmaterial (insbesondere auf Lithiumsalzbasis) wird als Latentwärmespeicher verwendet, um mit Hilfe eines Phasenübergangs (insbesondere von fest zu flüssig) thermodynamische Energie zu speichern. Mit anderen Worten wird die Enthalpie der reversiblen thermodynamischen Zustandsänderung des Phasenübergangsmaterials zur Speicherung der entsprechenden thermodynamischen Energie eingesetzt. Eine Hochvakuum-Isolation des Wärmespeichers erlaubt dann auch eine verlustarme Speicherung der thermischen Energie über Nacht.

Es sei explizit erwähnt, dass es sich bei der vorliegenden Erfindung sowohl bei der zweiten Einrichtung als auch bei der dritten Einrichtung um eine Wärmequelle oder sowohl bei der zweiten Einrichtung als auch bei der dritten Einrichtung um eine Wärmesenke handeln könnte. In diesem Fall würde anhand der gewählten Strömungsrichtung festgelegt, zu welcher Wärmesenke die Wärme z.B. von dem Wärmespeicher transportiert wird oder von welcher Wärmequelle die Wärme z.B. zu dem Wärmespeicher transportiert wird.

Bei der Wärmequelle kann es sich um einen Abgaswärmetauscher des Fahrzeugs handeln.

Mit Hilfe eines Abgaswärmetauschers kann eine in einem Abgas des Fahrzeugs vorhandene Abwärme zu einer Wärmesenke geführt werden oder in einem Wärmespeicher gespeichert werden. Indem zur Wärmeübertragung das Transfermedium eingesetzt wird, wird vorteilhafterweise vermieden, dass die Wärme in Form von Abgas zur Wärmesenke oder zum Wärmespeicher transportiert wird.

Die Wärmesenke kann eine oder mehrere Wärmesenken aus einer Gruppe von Wärmesenken umfassen, wobei die Gruppe von Wärmesenken folgende Elemente umfasst:
- das Kühlwasser des Fahrzeugs,
- das Getriebeöl eines Getriebes des Fahrzeugs,
- das Motoröl eines Verbrennungsmotors des Fahrzeugs,
- das Getriebe des Fahrzeugs,
- den Verbrennungsmotor des Fahrzeugs,
- einen Energiespeicher (beispielsweise eine Batterie) des Fahrzeugs,
- eine Brennstoffzelle des Fahrzeugs,
- einen oder mehrere Sitze des Fahrzeugs,
- einen Elektromotor insbesondere zum Antrieb des Fahrzeugs,
- einen Ladeluftkühler des Fahrzeugs,
- eine oder mehrere elektronische Komponenten des Fahrzeugs,
- eine Leistungselektronik des Fahrzeugs, und
- die Ladeluft des Verbrennungsmotors.

Mit der vorliegenden Erfindung kann also beispielsweise die im Abgas vorhandene Abwärme in einem Wärmespeicher gespeichert und anschließend (beispielsweise am nächsten Tag zu Beginn einer neuen Fahrt des Fahrzeugs) an eine oder mehrere der vorab aufgeführten Wärmesenken abgegeben werden.

Im Rahmen der vorliegenden Erfindung wird auch ein System zur Wärmeübertragung für ein Fahrzeug bereitgestellt. Dabei umfasst das System eine Pumpe sowie eine erste, zweite und dritte Einrichtung des Fahrzeugs. Das System ist ausgestaltet, um mittels der Pumpe und einem Transfermedium Wärme zwischen der ersten Einrichtung und der zweiten Einrichtung auszutauschen, wenn die Pumpe das die Wärme transportierende Transfermedium in eine erste Strömungsrichtung pumpt. Darüber hinaus ist das System ausgestaltet, um die Wärme zwischen der ersten und der dritten Einrichtung auszutauschen, wenn die Pumpe das Transfermedium in eine zweite Strömungsrichtung, welche der ersten Strömungsrichtung direkt entgegengesetzt ist, pumpt.

Bei der Pumpe kann es sich um eine Zahnradpumpe oder um eine Kolbenpumpe handeln. Bei solchen Pumpen vom Typ Verdrängerpumpe ist rein hydraulisch eine Strömungsumkehr sehr einfach zu realisieren. Falls die eingesetzte Pumpe ein Druckbegrenzungsventil aufweist, muss dieses in beiden Strömungsrichtungen arbeiten können.

Die Vorteile des erfindungsgemäßen Systems entsprechen im Wesentlichen den Vorteilen des erfindungsgemäßen Verfahrens, welche vorab im Detail ausgeführt sind, so dass hier auf eine Wiederholung verzichtet wird.

Das erfindungsgemäße System umfasst insbesondere einen ersten Kreislauf des Transfermediums und einen zweiten Kreislauf des Transfermediums. Dabei wird unter dem ersten bzw. zweiten Kreislauf eine Anordnung von Leitungen und Einrichtungen verstanden, so dass das Transfermedium sowohl im ersten Kreislauf als auch im zweiten Kreislauf im Kreis gepumpt werden kann. Dabei befindet sich die Pumpe und die erste Einrichtung, welche in Reihe hintereinander angeordnet sind, sowohl in dem ersten Kreislauf als auch in dem zweiten Kreislauf (d.h. der erste Kreislauf und zweite Kreislauf weisen einen gemeinsamen Abschnitt auf, in welchem die Pumpe und die erste Einrichtung angeordnet sind). Dagegen ist die zweite Einrichtung nur in dem ersten Kreislauf und die dritte Einrichtung nur in dem zweiten Kreislauf angeordnet. Das System ist derart ausgestaltet, dass das Transfermedium nur in dem ersten Kreislauf im Kreis strömt, wenn die Pumpe das Transfermedium in der ersten Strömungsrichtung pumpt, und dass das Transfermedium nur in dem zweiten Kreislauf im Kreis strömt, wenn die Pumpe das Transfermedium in der zweiten Strömungsrichtung pumpt.

Mit anderen Worten kann vorteilhafterweise durch eine entsprechende Ansteuerung der Pumpe dafür gesorgt werden, dass das Transfermedium entweder nur den ersten Kreislauf oder nur den zweiten Kreislauf durchläuft. Durch eine entsprechende Ansteuerung der Pumpe findet also entweder ein Wärmeaustausch zwischen der ersten und der zweiten Einrichtung oder ein Wärmeaustausch zwischen der ersten und der dritten Einrichtung statt.

Darüber hinaus umfasst das erfindungsgemäße System vorteilhafterweise eine erste Strömungsblockierungs-Vorrichtung und eine zweite Strömungsblockierungs-Vorrichtung. Dabei bilden die erste Strömungsblockierungs-Vorrichtung und die zweite Einrichtung (z. B. eine Wärmequelle) eine Reihenschaltung, welche derart in dem ersten Kreislauf angeordnet ist, dass das Transfermedium von der ersten Strömungsblockierungs-Vorrichtung blockiert wird, wenn es in der zweiten Strömungsrichtung strömt. In ähnlicher Weise bilden die zweite Strömungsblockierungs-Vorrichtung und die dritte Einrichtung (z. B. eine Wärmesenke) eine Reihenschaltung, welche derart in dem zweiten Kreislauf angeordnet ist, dass das Transfermedium von der zweiten Strömungsblockierungs-Vorrichtung blockiert wird, wenn es in der ersten Strömungsrichtung strömt.

Bei dieser Ausführungsform verhindert demnach die jeweilige Strömungsblockierungs-Vorrichtung, dass das Transfermedium den jeweiligen Kreislauf in der falschen Richtung durchströmt.

Vorteilhafterweise liegt die Pumpe in Richtung gemäß der ersten Strömungsrichtung gesehen hinter der ersten Einrichtung (z. B. einem Wärmespeicher).

Durch die erfindungsgemäße Anordnung der Pumpe hinter der ersten Einrichtung liegt die Pumpe sowohl innerhalb des ersten als auch innerhalb des zweiten Kreislaufs vorteilhafterweise an der jeweils kältesten Stelle innerhalb des betrachteten Kreislaufs.

Vorteilhafterweise wird die erste Strömungsblockierungs-Vorrichtung in Richtung der ersten Strömungsrichtung gesehen, vor der zweiten Einrichtung (z. B. einer Wärmequelle) angeordnet.

Durch die erfindungsgemäße Anordnung der ersten Strömungsblockierungs-Vorrichtung vor der zweiten Einrichtung innerhalb des ersten Kreislaufs befindet sich die erste Strömungsblockierungs-Vorrichtung vorteilhafterweise im kältesten Abschnitt des ersten Kreislaufs.

Vorteilhafterweise wird die zweite Strömungsblockierungs-Vorrichtung in Richtung der zweiten Strömungsrichtung gesehen nach der dritten Einrichtung (z. B. einer Wärmesenke) angeordnet.

Durch diese erfindungsgemäße Anordnung der zweiten Strömungsblockierungs-Vorrichtung nach der dritten Einrichtung innerhalb des zweiten Kreislaufs befindet sich auch die zweite Strömungsblockierungs-Vorrichtung vorteilhafterweise im kältesten Abschnitt des zweiten Kreislaufs.

Insbesondere umfasst das System einen ersten Verzweigungspunkt und einen zweiten Verzweigungspunkt. Dabei ist der erste Verzweigungspunkt in der ersten Strömungsrichtung hinter der Reihenschaltung aus der Pumpe und der ersten Einrichtung angeordnet, während der zweite Verzweigungspunkt in der ersten Strömungsrichtung vor der Pumpe und der ersten Einrichtung, welche in Reihe angeordnet sind, angeordnet ist. Der erste Kreislauf und der zweite Kreislauf verzweigen sowohl an dem ersten Verzweigungspunkt als auch an dem zweiten Verzweigungspunkt (oder laufen sowohl an dem ersten Verzweigungspunkt als auch an dem zweiten Verzweigungspunkt zusammen). Die erste Strömungsblockierungs-Vorrichtung liegt nur in dem ersten Kreislauf (also nicht in dem zweiten Kreislauf) zwischen dem ersten Verzweigungspunkt und dem zweiten Verzweigungspunkt und blockiert einen Strom in der zweiten Strömungsrichtung. In ähnlicher Weise liegt die zweite Strömungsblockierungs-Vorrichtung nur in dem zweiten Kreislauf (also nicht in dem ersten Kreislauf) zwischen dem ersten Verzweigungspunkt und dem zweiten Verzweigungspunkt und blockiert einen Strom in der ersten Strömungsrichtung.

Insbesondere durch die entsprechende Anordnung der beiden Strömungsblockierungs-Vorrichtungen wird dafür gesorgt, dass das Transfermedium nur den ersten Kreislauf durchläuft, wenn es von der Pumpe in der ersten Strömungsrichtung gepumpt wird, während das Transfermedium nur den zweiten Kreislauf durchläuft, wenn es von der Pumpe in der zweiten Strömungsrichtung gepumpt wird.

Bei der Strömungsblockierungs-Vorrichtung kann es sich um ein Ventil mit einem Eingang und einem Ausgang handeln, welches ähnlich wie ein Fahrradventil beispielsweise eine Strömung vom Ausgang zum Eingang blockiert während es eine Strömung vom Eingang zum Ausgang nahezu ungehindert passieren lässt.

Es kann vorteilhaft sein, wenn sowohl die erste Strömungsblockierungs-Vorrichtung als auch die zweite Strömungsblockierungs-Vorrichtung direkt über denselben Verzweigungspunkt mit der Pumpe verbunden sind, so dass weder zwischen der ersten Strömungsblockierungs-Vorrichtung und der Pumpe noch zwischen der zweiten Strömungsblockierungs-Vorrichtung und der Pumpe eine der Einrichtungen angeordnet ist.

Das erfindungsgemäße System kann auch zur Durchführung des erfindungsgemäßen Verfahrens ausgestaltet sein.

Schließlich wird im Rahmen der vorliegenden Erfindung auch ein Fahrzeug bereitgestellt, welches ein erfindungsgemäßes System umfasst.

Die vorliegende Erfindung ist insbesondere für Kraftfahrzeuge geeignet. Selbstverständlich ist die vorliegende Erfindung jedoch nicht auf diesen bevorzugten Anwendungsbereich eingeschränkt, da die vorliegende Erfindung beispielsweise auch bei Schiffen, Flugzeugen sowie gleisgebundenen oder spurgeführten Fahrzeugen einsetzbar ist. Darüber hinaus ist die Erfindung selbst losgelöst von Fortbewegungsmitteln, beispielsweise auch für ortsfeste Systeme (z.B. einen Kran), geeignet.

Im Folgenden wird die vorliegende Erfindung anhand bevorzugter erfindungsgemäßer Ausführungsformen im Detail mit Bezug zu den Figuren erläutert.
Fig. 1 stellt ein erfindungsgemäßes System schematisch in allgemeiner Form dar.
Fig. 2 stellt ein erfindungsgemäßes System in einem ersten Betriebszustand dar, in welchem ein Transfermedium in einem ersten Kreislauf gepumpt wird.
Fig. 3 stellt das in Fig. 2 dargestellte System in einem zweiten Betriebszustand dar, in welchem ein Transfermedium in einem zweiten Kreislauf gepumpt wird.
In Fig. 4 ist ein erfindungsgemäßes Fahrzeug mit einem erfindungsgemäßen System schematisch dargestellt.

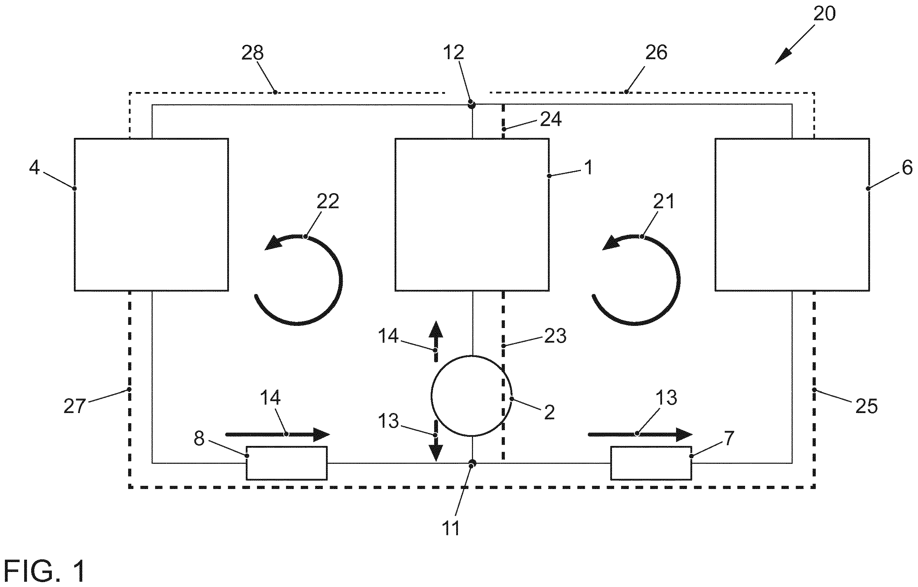

In Fig. 1 ist ein erfindungsgemäßes System 20 in allgemeiner Form dargestellt. Das System 20 umfasst einen Wärmespeicher 1, eine Pumpe 2, einen Kühlwasser-Wärmetauscher 4, einen Abgaswärmetauscher 6, eine erste Strömungsblockierungs-Vorrichtung 7 und eine zweite Strömungsblockierungs-Vorrichtung 8. Das System 20 umfasst darüber hinaus einen ersten Kreislauf 21 und einen zweiten Kreislauf 22. In dem ersten Kreislauf 21 sind der Wärmespeicher 1, die Pumpe 2, die erste Strömungsblockierungs-Vorrichtung 7 und der Abgaswärmetauscher 6 angeordnet. In dem zweiten Kreislauf 22 sind der Wärmespeicher 1, der Kühlwasser-Wärmetauscher 4, die zweite Strömungsblockierungs-Vorrichtung 8 und die Pumpe 2 angeordnet. Dabei gehören der Wärmespeicher 1 und die Pumpe 2 sowohl zu dem ersten Kreislauf 21 als auch zu dem zweiten Kreislauf 22. Bei zwei Verzweigungspunkten 11, 12, welche in der Strömungsrichtung 13, 14 einmal vor und einmal nach der Kombination aus dem Wärmespeicher 1 und der Pumpe 2 angeordnet sind, trennen sich der erste Kreislauf 21 und der zweite Kreislauf 22 bzw. kommen der erste Kreislauf 21 und der zweite Kreislauf 22 zusammen.

Die gestrichelten Abschnitte 23-28 kennzeichnen jeweils Bereiche, in welchen die Pumpe 2 oder die jeweilige Strömungsblockierungs-Vorrichtung 7, 8 angeordnet werden kann. Dabei wird die Pumpe 2 in Richtung der ersten Strömungsrichtung 13 gesehen vorteilhafterweise im Abschnitt 23 nach dem Wärmespeicher 1 angeordnet, wobei die Pumpe 2 allerdings auch im Abschnitt 24 vor dem Wärmespeicher 1 angeordnet werden kann. Die erste Strömungsblockierungs-Vorrichtung 7 wird vorteilhafterweise im Abschnitt 25 in Richtung der ersten Strömungsrichtung 13 vor dem Abgas-Wärmetauscher 6 angeordnet, wobei die erste Strömungsblockierungs-Vorrichtung 7 auch im Abschnitt 26 nach dem Abgaswärmetauscher 6 angeordnet werden kann. Die zweite Strömungsblockierungs-Vorrichtung 8 wird vorteilhafterweise in Richtung der zweiten Strömungsrichtung 14 gesehen im Abschnitt 27 nach dem Kühlwasser-Wärmetauscher 4 angeordnet, wobei die zweite Strömungsblockierungs-Vorrichtung 8 auch im Abschnitt 28 vor dem Kühlwasser-Wärmetauscher 4 angeordnet werden kann.

Der Fachmann erkennt, dass sowohl die Pumpe 2 als auch die beiden Strömungsblockierungs-Vorrichtungen 7, 8 bevorzugt im jeweils kältesten Abschnitt des jeweiligen Kreislaufs 21, 22 angeordnet werden. Im Kreislauf 21 befindet sich der kälteste Abschnitt in Richtung der ersten Strömungsrichtung 13 gesehen nach dem Wärmespeicher 1 (und vor dem Abgaswärmetauscher 6), da der Wärmespeicher 1 im ersten Kreislauf 21 die Rolle einer Wärmesenke spielt. Im Kreislauf 22 befindet sich der kälteste Abschnitt in Richtung der zweiten Strömungsrichtung 14 gesehen vor dem Wärmespeicher 1 (und nach dem Kühlwasser-Wärmetauscher 4), da der Wärmespeicher 1 im zweiten Kreislauf 22 die Rolle einer Wärmequelle spielt.

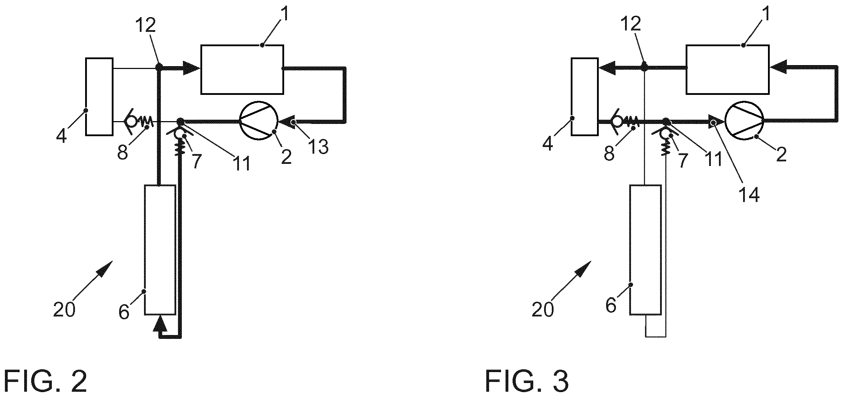

In Fig. 2 ist das System 20 in einem ersten Betriebszustand dargestellt, in welchem das Transfermedium durch die Pumpe 2 in die erste Strömungsrichtung 13 und damit durch den ersten Kreislauf 21 (und nicht durch den zweiten Kreislauf 22) gepumpt wird. Da die erste Strömungsblockierungs-Vorrichtung 7 nur eine Strömung in der zweiten Strömungsrichtung 14 blockiert und somit eine Strömung in der ersten Strömungsrichtung 13 durchlässt, strömt das von der Pumpe 2 in die erste Strömungsrichtung 13 gepumpte Transfermedium nach dem ersten Verzweigungspunkt 11 durch die erste Strömungsblockierungs-Vorrichtung 7 und weiter durch den Abgaswärmetauscher 6 und über den zweiten Verzweigungspunkt 12 und den Wärmespeicher 1 wieder zurück zu der Pumpe 2. Die zweite Strömungsblockierungs-Vorrichtung 8, welche eine Strömung in der ersten Strömungsrichtung 13 blockiert, sorgt dafür, dass das von der Pumpe 2 in der ersten Strömungsrichtung 13 gepumpte Transfermedium am ersten Verzweigungspunkt 11 nicht durch die zweite Strömungsblockierungs-Vorrichtung 8 zu dem Kühlwasser-Wärmetauscher 4 strömt, sondern nur den ersten Kreislauf 21 durchläuft.

Mit anderen Worten findet in dem ersten Betriebszustand des Systems 20, in welchem die Pumpe 2 das Transfermedium in die erste Strömungsrichtung 13 pumpt, nur ein Wärmeaustausch zwischen dem Wärmespeicher 1 und dem Abgaswärmetauscher 6 statt, während kein Wärmeaustausch zwischen dem Wärmespeicher 1 und dem Kühlwasser-Wärmetauscher 4 über das Transfermedium stattfindet. Dieser erste Betriebszustand kann auch als Beladung bezeichnet werden, da in diesem ersten Betriebszustand der Wärmespeicher 1 mit der im Abgas befindlichen Wärme geladen wird.

In Fig. 3 ist das System 20, welches aus Fig. 2 bekannt ist, in einem zweiten Betriebszustand dargestellt, in welchem das Transfermedium durch die Pumpe 2 in die zweite Strömungsrichtung 14 und damit nur durch den zweiten Kreislauf 22 (und nicht durch den ersten Kreislauf 21) gepumpt wird. Da die zweite Strömungsblockierungs-Vorrichtung 8 nur eine Strömung in der ersten Strömungsrichtung 13 blockiert und daher eine Strömung in der zweiten Strömungsrichtung 14 durchlässt, strömt das von der Pumpe 2 in die zweite Strömungsrichtung 14 angesaugte Transfermedium von dem Kühlwasser-Wärmetauscher 4 kommend durch die zweite Strömungsblockierungs-Vorrichtung 8 weiter durch die Pumpe 2 und weiter durch den Wärmespeicher 1 wieder zu dem Kühlwasser-Wärmetauscher 4. Die erste Strömungsblockierungs-Vorrichtung 7, welche eine Strömung in der zweiten Strömungsrichtung 14 blockiert, sorgt dafür, dass das von der Pumpe 2 in der zweiten Strömungsrichtung 14 angesaugte Transfermedium am ersten Verzweigungspunkt 11 nicht durch die erste Strömungsblockierungs-Vorrichtung 7 und damit nicht durch den Abgaswärmetauscher 6 strömt.

Mit anderen Worten findet in dem zweiten Betriebszustand des Systems 20, in welchem die Pumpe 2 das Transfermedium in die zweite Strömungsrichtung 14, welche der ersten Strömungsrichtung 13 entgegengerichtet ist, pumpt, nur ein Wärmeaustausch zwischen dem Wärmespeicher 1 und dem Kühlwasser-Wärmetauscher 4 statt, während kein Wärmeaustausch zwischen dem Wärmespeicher 1 und dem Abgaswärmetauscher 6 mittels des Transfermediums stattfindet. Dieser zweite Betriebszustand kann auch als Entladung bezeichnet werden, da in diesem zweiten Betriebszustand die in dem Wärmespeicher 1 gespeicherte Wärme mit Hilfe des Kühlwasser-Wärmetauschers 4 an das Kühlwasser des Fahrzeugs abgeführt bzw. entladen wird.

Im ersten Betriebszustand (Fig. 2) ist der Druck am Verzweigungspunkt 11 größer als der Druck am Verzweigungspunkt 12, da sich der Druck aufgrund der Durchströmung des Wärmetauschers 6 verringert. Diese Druckdifferenz zwischen dem Druck am Verzweigungspunkt 11 und dem Druck am Verzweigungspunkt 12 unterbindet gemäß einer statischen Betrachtung eine Durchströmung des Kühlwasser-Wärmetauschers 4. Damit es auch aufgrund einer Betrachtung der dynamischen Verhältnisse zu keiner Durchströmung des Kühlwasser-Wärmetauschers 4 kommt, darf beispielsweise am Verzweigungspunkt 11 keine Druckabsenkung durch Auftreten eines Venturi-Effekts und am Verzweigungspunkt 12 keine Druckanhebung aufgrund eines Staudruckeffekts auftreten. Messungen belegen, dass die aufgrund der statischen Betrachtung vorhandenen Druckdifferenzen in der Regel einen größeren Einfluss haben als dynamische Effekte.

Um sicher zu gehen, dass nur die aufgrund der statischen Betrachtung vorhandenen und in Figuren 2 und 3 dargestellten Strompfade existieren, können die Strömungsblockierungs-Vorrichtungen 7, 8 in ihrer Öffnungsrichtung leicht federbeaufschlagt (z.B. mit 10 mbar) sein. Darüber hinaus kann die Stromaufteilung im Verzweigungspunkt 11 so ausgeführt werden, dass die Strömung im ersten Betriebszustand direkt auf die Strömungsblockierungs-Vorrichtung 8 gerichtet ist. Des Weiteren kann die Stromaufteilung im Verzweigungspunkt 12 so ausgelegt werden, dass jeweils der abgeschaltete Zweig einen 90°-Winkel zur Hauptstromrichtung aufweist, was zu einem Unterdruck aufgrund des Venturi-Effekts führt.

Im Folgenden werden Varianten der in den Figuren 2 und 3 dargestellt bevorzugten Ausführungsform diskutiert:
Die Strömungsblockierungs-Vorrichtung 7 kann auf der anderen Seite des Abgaswärmetauschers 6 angeordnet werden. In ähnlicher Weise kann die Strömungsblockierungs-Vorrichtung 8 auf der anderen Seite des Kühlwasser-Wärmetauschers 4 angeordnet werden. Diese beiden Varianten weisen allerdings den Nachteil höherer Wärmeverluste im nicht durchströmten Zweig auf, da Verwirbelungen in die Wärmeübertrager hinein begünstigt werden.

Die Pumpe 2 kann auf der anderen Seite des Wärmespeichers 1 angeordnet werden. Diese Variante weist allerdings eine höhere Temperaturbelastung der Pumpe 2 auf.

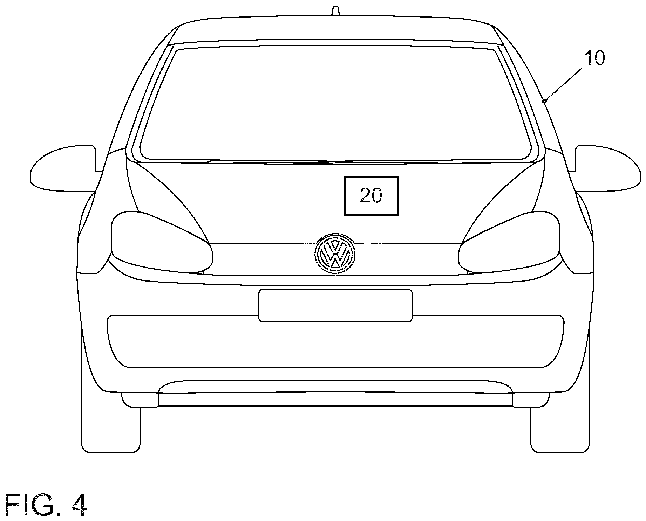

In Fig. 4 ist schematisch ein erfindungsgemäßes Fahrzeug 10 dargestellt, welches ein erfindungsgemäßes System 20 umfasst.

### Bezugszeichenliste

- 1: Wärmespeicher
- 2: Pumpe
- 4: Kühlwasser-Wärmetauscher
- 6: Abgaswärmetauscher
- 7,8: Ventil
- 10: Fahrzeug
- 11,12: Verzweigungspunkt
- 13,14: Strömungsrichtung
- 20: System
- 21,22: Kreislauf
- 23-28: Abschnitt

## Patentansprüche

1. Verfahren zur Wärmeübertragung für ein Fahrzeug (10), wobei das Verfahren umfasst:
Pumpen eines Wärme transportierenden Transfermediums in eine erste Strömungsrichtung (13), um Wärme zwischen einer ersten Einrichtung (1) des Fahrzeugs (10) und einer zweiten Einrichtung (6) des Fahrzeugs (10) auszutauschen, und Pumpen des Transfermediums in eine der ersten Strömungsrichtung (13) entgegengesetzte zweite Strömungsrichtung (14), um Wärme zwischen der ersten Einrichtung (1) und einer von der zweiten Einrichtung (6) verschiedenen dritten Einrichtung (4) des Fahrzeugs (10) auszutauschen.

2. Verfahren nach Anspruch 1,
**dadurch gekennzeichnet,**
**dass** die erste Einrichtung einen Wärmespeicher (1) des Fahrzeugs (10) umfasst, dass die zweite Einrichtung eine Wärmequelle (6) des Fahrzeugs (10) ist,
**dass** die dritte Einrichtung eine Wärmesenke (4) des Fahrzeugs (10) ist,
**dass** beim Pumpen des Transfermediums in die erste Strömungsrichtung (13) Wärme von der Wärmequelle (6) zu dem Wärmespeicher (1) transportiert wird, und
**dass** beim Pumpen des Transfermediums in die zweite Strömungsrichtung (14) Wärme von dem Wärmespeicher (1) zu der Wärmesenke (4) transportiert wird.

3. Verfahren nach Anspruch 2,
**dadurch gekennzeichnet,**
**dass** die Wärmequelle ein Abgaswärmetauscher (6) des Fahrzeugs (10) ist.

4. Verfahren nach Anspruch 2, oder 3,
**dadurch gekennzeichnet,**
**dass** die Wärmesenke zumindest eine Wärmesenke aus einer Wärmesenken-Gruppe umfasst, wobei die Wärmesenken-Gruppe umfasst:
• ein Kühlwasser (4) des Fahrzeugs (10),
• ein Getriebeöl eines Getriebes des Fahrzeugs (10),
• das Getriebe,
• ein Verbrennungsmotor des Fahrzeugs (10),
• einen Energiespeicher des Fahrzeugs (10),
• eine Brennstoffzelle des Fahrzeugs (10),
• mindestens einen Sitz des Fahrzeugs (10),
• einen Elektromotor des Fahrzeugs (10),
• einen Ladeluftkühler des Fahrzeugs (10),
• mindestens eine elektrische Komponente des Fahrzeugs (10),
• eine Leistungselektronik des Fahrzeugs (10), und
• eine Ladeluft des Verbrennungsmotors.

5. System zur Wärmeübertragung für ein Fahrzeug (10),
wobei das System (20) eine Pumpe (2), eine erste Einrichtung (1) des Fahrzeugs (10), eine zweite Einrichtung (6) des Fahrzeugs (10) und eine von der zweiten Einrichtung (6) verschiedene dritte Einrichtung (4) des Fahrzeugs (10) umfasst,
wobei das System (20) ausgestaltet ist, um Wärme zwischen der ersten Einrichtung (1) und der zweiten Einrichtung (6) auszutauschen, wenn die Pumpe (2) ein Wärme transportierendes Transfermedium in einer ersten Strömungsrichtung (13) pumpt, und wobei das System (20) ausgestaltet ist, um Wärme zwischen der ersten Einrichtung (1) und der dritten Einrichtung (4) auszutauschen, wenn die Pumpe (2) das Transfermedium in einer der ersten Strömungsrichtung (13) entgegengesetzten zweiten Strömungsrichtung (14) pumpt.

6. System nach Anspruch 5,
**dadurch gekennzeichnet,**
**dass** das System (20) einen ersten Kreislauf (21) des Transfermediums und einen zweiten Kreislauf (22) des Transfermediums umfasst,
**dass** die Pumpe (2) und die erste Einrichtung (1) in Reihe geschaltet sowohl in dem ersten Kreislauf (21) als auch in dem zweiten Kreislauf (22) angeordnet sind,
**dass** die zweite Einrichtung (6) in dem ersten Kreislauf (21) angeordnet ist,
**dass** die dritte Einrichtung (4) in dem zweiten Kreislauf (22) angeordnet ist,
**dass** die Pumpe (2) das Transfermedium in der ersten Strömungsrichtung (13) in dem ersten Kreislauf (21) pumpt, und
**dass** die Pumpe (2) das Transfermedium in der zweiten Strömungsrichtung (14) in dem zweiten Kreislauf (22) pumpt.

7. System nach Anspruch 6,
**dadurch gekennzeichnet,**
**dass** das System (20) eine erste Strömungsblockierungs-Vorrichtung (7) und eine zweite Strömungsblockierungs-Vorrichtung (8) umfasst,
**dass** die erste Strömungsblockierungs-Vorrichtung (7) in Reihe mit der zweiten Einrichtung (6) derart in dem ersten Kreislauf (21) angeordnet ist, dass die erste Strömungsblockierungs-Vorrichtung (7) das Transfermedium in der zweiten Strömungsrichtung (14) blockiert, und
**dass** die zweite Strömungsblockierungs-Vorrichtung (8) in Reihe mit der dritten Einrichtung (4) derart in dem zweiten Kreislauf (22) angeordnet ist, dass die zweite Strömungsblockierungs-Vorrichtung (8) das Transfermedium in der ersten Strömungsrichtung (13) blockiert.

8. System nach Anspruch 7,
**dadurch gekennzeichnet,**
**dass** die Pumpe (2) in der ersten Strömungsrichtung (13) nach der ersten Einrichtung (1) angeordnet ist.

9. System nach Anspruch 7 oder 8,
**dadurch gekennzeichnet,**
**dass** die erste Strömungsblockierungs-Vorrichtung (7) in der ersten Strömungsrichtung (13) vor der zweiten Einrichtung (6) angeordnet ist.

10. System nach einem der Ansprüche 7-9,
**dadurch gekennzeichnet,**
**dass** die zweite Strömungsblockierungs-Vorrichtung (8) in der zweiten Strömungsrichtung (14) nach der dritten Einrichtung (4) angeordnet ist.

## Claims

1. Method for heat transfer through a vehicle (10), the method comprising: pumping a heat-transporting transfer medium in a first flow direction (13), in order to exchange heat between a first device (1) of the vehicle (10) and a second device (6) of the vehicle (10), and pumping of the transfer medium in a second flow direction (14) which is opposed to the first flow direction (13), in order to exchange heat between the first device (1) and a third device (4) of the vehicle (10), which third device (4) is different from the second device (6).

2. Method according to Claim 1, **characterized in that** the first device comprises a heat accumulator (1) of the vehicle (10), **in that** the second device is a heat source (6) of the vehicle (10), **in that** the third device is a heat sink (4) of the vehicle (10), **in that**, during pumping of the transfer medium in the first flow direction (13), heat is transported from the heat source (6) to the heat accumulator (1), and **in that**, during pumping of the transfer medium in the second flow direction (14), heat is transported from the heat accumulator (1) to the heat sink (4).

3. Method according to Claim 2, **characterized in that** the heat source is an exhaust gas heat exchanger (6) of the vehicle (10).

4. Method according to Claim 2 or 3, **characterized in that** the heat sink comprises at least one heat sink from a heat sink group, the heat sink group comprising:
• cooling water (4) of the vehicle (10),
• transmission oil of a transmission of the vehicle (10),
• the transmission,
• an internal combustion engine of the vehicle (10),
• an energy store of the vehicle (10),
• a fuel cell of the vehicle (10),
• at least one seat of the vehicle (10),
• an electric motor of the vehicle (10),
• an intercooler of the vehicle (10),
• at least one electric component of the vehicle (10),
• a power electronics system of the vehicle (10), and
• charge air of the internal combustion engine.

5. System for heat transfer for a vehicle (10), the system (20) comprising a pump (2), a first device (1) of the vehicle (10), a second device (6) of the vehicle (10), and a third device (4) of the vehicle (10), which third device (4) is different from the second device (6), the system (20) being configured to exchange heat between the first device (1) and the second device (6) when the pump (2) pumps a heat-transporting transfer medium in a first flow direction (13), and the system (20) being configured to exchange heat between the first device (1) and the third device (4) when the pump (2) pumps the transfer medium in a second flow direction (14) which is opposed to the first flow direction (13).

6. System according to Claim 5, **characterized in that** the system (20) comprises a first circuit (21) of the transfer medium and a second circuit (22) of the transfer medium, **in that** the pump (2) and the first device (1) are connected in series and are arranged both in the first circuit (21) and in the second circuit (22), **in that** the second device (6) is arranged in the first circuit (21), **in that** the third device (4) is arranged in the second circuit (22), **in that** the pump (2) pumps the transfer medium in the first flow direction (13) in the first circuit (21), and **in that** the pump (2) pumps the transfer medium in the second flow direction (14) in the second circuit (22).

7. System according to Claim 6, **characterized in that** the system (20) comprises a first flow blocking apparatus (7) and a second flow blocking apparatus (8), **in that** the first flow blocking apparatus (7) is arranged in the first circuit (21) in series with the second device (6) in such a way that the first flow blocking apparatus (7) blocks the transfer medium in the second flow direction (14), and **in that** the second flow blocking apparatus (8) is arranged in the second circuit (22) in series with the third device (4) in such a way that the second flow blocking apparatus (8) blocks the transfer medium in the first flow direction (13).

8. System according to Claim 7, **characterized in that** the pump (2) is arranged downstream of the first device (1) in the first flow direction (13).

9. System according to Claim 7 or 8, **characterized in that** the first flow blocking apparatus (7) is arranged upstream of the second device (6) in the first flow direction (13).

10. System according to one of Claims 7 to 9, **characterized in that** the second flow blocking apparatus (8) is arranged downstream of the third device (4) in the second flow direction (14).

## Revendications

1. Procédé de transfert thermique pour un véhicule (10), dans lequel le procédé comprend:
pompage d'un fluide de transfert transportant de la chaleur dans une première direction d'écoulement (13), afin d'échanger de la chaleur entre un premier dispositif (1) du véhicule (10) et un deuxième dispositif (6) du véhicule (10), et
pompage du fluide de transfert dans une deuxième direction d'écoulement (14) opposée à la première direction d'écoulement (13), afin d'échanger de la chaleur entre le premier dispositif (1) et un troisième dispositif (4) du véhicule (10) différent du deuxième dispositif (6).

2. Procédé selon la revendication 1, **caractérisé en ce que**
le premier dispositif comprend un accumulateur de chaleur (1) du véhicule (10),
le deuxième dispositif est une source de chaleur (6) du véhicule (10),
le troisième dispositif est un puits de chaleur (4) du véhicule (10),
lors du pompage du fluide de transfert dans la première direction d'écoulement (13), on transporte de la chaleur de la source de chaleur (6) à l'accumulateur de chaleur (1), et
lors du pompage du fluide de transfert dans la deuxième direction d'écoulement (14), on transporte de la chaleur de l'accumulateur de chaleur (1) au puits de chaleur (4).

3. Procédé selon la revendication 2, **caractérisé en ce que** la source de chaleur est un échangeur de chaleur des gaz d'échappement (6) du véhicule (10).

4. Procédé selon la revendication 2 ou 3, **caractérisé en ce que** le puits de chaleur comprend au moins un puits de chaleur d'un groupe de puits de chaleur, dans lequel le groupe de puits de chaleur comprend:
• une eau de refroidissement (4) du véhicule (10),
• une huile à engrenages d'une boîte de vitesses du véhicule (10),
• la boîte de vitesses,
• un moteur à combustion interne du véhicule (10),
• un accumulateur d'énergie du véhicule (10),
• une pile à combustible du véhicule (10),
• au moins un siège du véhicule (10),
• un moteur électrique du véhicule (10),
• un refroidisseur d'air de suralimentation du véhicule (10),
• au moins un composant électrique du véhicule (10),
• une électronique de puissance du véhicule (10), et
• un air de suralimentation du moteur à combustion interne.

5. Système de transfert de chaleur pour un véhicule (10),
dans lequel le système (20) comprend une pompe (2), un premier dispositif (1) du véhicule (10), un deuxième dispositif (6) du véhicule (10) et un troisième dispositif (4) du véhicule (10) différent du deuxième dispositif (6),
dans lequel le système (20) est configuré pour échanger de la chaleur entre le premier dispositif (1) et le deuxième dispositif (6) lorsque la pompe (2) pompe un fluide de transfert transportant de la chaleur dans une première direction d'écoulement (13), et
dans lequel le système (20) est configuré pour échanger de la chaleur entre le premier dispositif (1) et le troisième dispositif (4) lorsque la pompe (2) pompe le fluide de transfert dans une deuxième direction d'écoulement (14) opposée à la première direction d'écoulement (13).

6. Système selon la revendication 5, **caractérisé en ce que**
le système (20) comprend un premier circuit (21) du fluide de transfert et un deuxième circuit (22) du fluide de transfert,
la pompe (2) et le premier dispositif (1) montés en série sont disposés aussi bien dans le premier circuit (21) que dans le deuxième circuit (22),
le deuxième dispositif (6) est disposé dans le premier circuit (21),
le troisième dispositif (4) est disposé dans le deuxième circuit (22),
la pompe (2) pompe le fluide de transfert dans la première direction d'écoulement (13) dans le premier circuit (21), et
la pompe (2) pompe le fluide de transfert dans la deuxième direction d'écoulement (14) dans le deuxième circuit (22).

7. Système selon la revendication 6, **caractérisé en ce que**
le système (20) comprend un premier dispositif de blocage d'écoulement (7) et un deuxième dispositif de blocage d'écoulement (8),
le premier dispositif de blocage d'écoulement (7) est disposé en série avec le deuxième dispositif (6) dans le premier circuit (21), de telle manière que le premier dispositif de blocage d'écoulement (7) bloque le fluide de transfert dans la deuxième direction d'écoulement (14), et
le deuxième dispositif de blocage d'écoulement (8) monté en série avec le troisième dispositif (4) est disposé dans le deuxième circuit (22), de telle manière que le deuxième dispositif de blocage d'écoulement (8) bloque le fluide de transfert dans la première direction d'écoulement (13).

8. Système selon la revendication 7, **caractérisé en ce que** la pompe (2) est disposée après le premier dispositif (1) dans la première direction d'écoulement (13).

9. Système selon la revendication 7 ou 8, **caractérisé en ce que** le premier dispositif de blocage d'écoulement (7) est disposé avant le deuxième dispositif (6) dans la première direction d'écoulement (13).

10. Système selon une des revendications 7 à 9, **caractérisé en ce que** le deuxième dispositif de blocage d'écoulement (8) est disposé après le troisième dispositif (4) dans la deuxième direction d'écoulement (14).
